# EUROPEAN PATENT SPECIFICATION

(11) **EP 2 108 550 B1**
(45) Date of publication and mention of the grant of the patent: **21.12.2011**
(21) Application number: 08154139.3
(22) Date of filing: 07.04.2008
(51) Int. Cl.: B60R 22/02

(54) **Seat belt system and vehicle**
Sitzgurtsystem und Fahrzeug
Système de ceinture de sécurité et véhicule

(43) Date of publication of application: 14.10.2009
(73) Proprietor: Volvo Car Corporation, 405 31 Göteborg (SE)
(72) Inventor: Axelson, Anders, S-423 41, Torslanda (SE)
(74) Representative: VALEA AB

(56) References cited:
- EP-A- 0 820 909
- WO-A-2004/101330
- GB-A- 2 414 442
- US-A- 5 058 701
- US-A1- 2002 089 163
- US-A1- 2006 001 252

## Description

### TECHNICAL FIELD

The present invention concerns a seat belt system and a vehicle comprising such a seat belt system.

### BACKGROUND OF THE INVENTION

Seat belts in vehicles are designed to reduce injuries to vehicle occupants, in the event of a collision, hard braking or an emergency stop, by preventing the wearer from hitting hard interior elements of a vehicle or other occupants of the vehicle and by preventing the wearer from being thrown from the vehicle.

Many vehicles are equipped with a 3-point seat belt that comprises a shoulder belt that is arranged to diagonally cross the chest of a vehicle occupant and a pelvic restraint that is arranged to cross the pelvis of a vehicle occupant in order to distribute crash forces across a vehicle occupant's chest, pelvis, and shoulders.

In a rollover situation, the pelvic restraint restrains a vehicle occupant's lower torso and prevents him/her from being fully ejected from the vehicle but the vehicle occupant's upper torso may slide out of the shoulder belt. A considerable amount of slack is then created and, during the rollover event, typically when the vehicle's roof hits the ground, the occupant is then less restrained and he/she may be thrown quite violently against the inner roof structure of the vehicle, for example. The chest of a vehicle occupant may also slide out from under the shoulder belt, if a vehicle is hit from the side or during a turbulent trip preceding a collision, for example during a run-off-road accident, or during a collision involving a plurality of vehicles. If the vehicle occupant is not therefore correctly restrained by his/her 3-point seat belt, the risk of him/her being seriously injured is considerably increased.

Some vehicles supplement a 3-point seat belt with an additional 2-point seat belt in order to better restrain a vehicle occupant in his/her seat. The article entitled "Four-Point Car Belts", which was published in The Car Connection, discloses a seat belt that adds an additional shoulder belt to a conventional traditional 3-point seat belt. The conventional 3-point seat belt is put on first and the additional shoulder belt is then pulled diagonally across the user's chest and is fastened on the opposite side of the user's seat to the conventional 3-point seat belt. Even though it has been found that an additional shoulder belt better holds a vehicle occupant in his/her seat in the event of a vehicle roll over or if the vehicle is hit from the side, many users consider the additional 2-point seat belt to be uncomfortable. Additionally, the need to fasten an extra seat belt has proved to be a hurdle in encouraging users to use a seat belt system comprising a 3-point seat belt and a 2-point seat belt. Furthermore, if the 2-point seat belt is mounted on the backrest of a vehicle occupant's seat, this may be expensive since the vehicle occupant's seat may need to be strengthened or modified to withstand the forces exerted thereupon by the 2-point seat belt.

Moreover, document US 2002/0089163A1 discloses the technical features of the preamble of independent claim 1.

### SUMMARY OF THE INVENTION

An object of the present invention is to provide an improved seat belt system for a vehicle.

This object is achieved by a seat belt system exhibiting the features characterised in independent claim 1. The belt system includes a 3-point seat belt that comprises a first section that is arranged to diagonally cross the chest of a vehicle occupant and a second section that is arranged to cross the pelvis of a vehicle occupant, and a 2-point seat belt that is arranged to diagonally cross the chest of a vehicle occupant in a direction that crosses the first section of the 3-point seat belt so as to form an X-shape, i.e. the 3-point seat belt and the 2-point seat belt together constitute a so-called "criss-cross" seat belt.

In accordance with the invention the seat belt system comprises a first locking means that is arranged to lock the 2-point seat belt, i.e. to initially prevent it from being pulled further out of a belt storage device for example, when the force on the seat belt exceeds a predetermined first force. A first force limiter is arranged to then substantially maintain the force exerted by the 2-point seat belt on the vehicle occupant at the predetermined first force, i.e. by adjusting the length of the 2-point seat belt in accordance with force on the 2-point seat belt, the force on the 2-point seat belt being caused by the movement of the vehicle occupant's chest pushing against the 2-point seat belt. The seat belt system also comprises a second locking means that is arranged to lock the 3-point seat belt when the force on the 3-point seat belt exceeds a predetermined second force. A second force limiter is then arranged to substantially maintain the force exerted by the 3-point seat belt on the vehicle occupant at the predetermined second force on the seat belt. The predetermined first force is less than the predetermined second force.

During normal driving conditions a vehicle occupant will be able to pull out the required lengths of seat belt webbing from seat belt storage devices for example and move around in his/her seat at will. However, during a turbulent journey, if the vehicle occupant's chest pushes against a seat belt and exerts a force on the seat belt that exceeds a predetermined level, or if a vehicle's collision detectors cause a seat belt to be retracted and thus cause a force to be exerted on the seat belt which exceeds a predetermined level, the seat belt's locking means will lock the seat belt. If/when a force exceeding the predetermined level acts on the seat belt, a belt force limiter will produce a controlled reduction in the locking effect of the locking means and cause the seat belt to slacken, whereby the force exerted by the seat belt on the occupant will not be increased even if the vehicle occupant continues to push against the seat belt. In the seat belt system according to the present invention the force on the 2-point seat belt is substantially maintained at a predetermined first force and the force on the 3-point seat belt is substantially maintained at a predetermined second force.

The 2-point seat belt therefore serves to prevent a vehicle occupant from sliding out from the shoulder belt (i.e. the first section) of the 3-point seat belt, i.e. it prevents so-called "twist out". The seat belt system will thereby better hold a user in his/her normal sitting position during a turbulent journey, especially a turbulent journey that sometimes precedes an accident or if a vehicle rolls over, or is hit from the side. The vehicle occupants will namely be better coupled to the vehicle and hence better secured in the event of any type of collision. Furthermore, the seat belt system according to the present invention better distributes crash forces across a vehicle occupant's chest and may thereby reduce the number or severity of injuries suffered by a vehicle occupant. Furthermore, the 2-point seat belt fits more loosely around a vehicle occupant than a 3-point seat belt, which will increase the vehicle occupant's comfort and may encourage the use of the 2-point seat belt.

A 2-point seatbelt may therefore simply be added to existing seat belt systems, such as on a conventional 3-point seat belt system, to increase the effectiveness of the existing seat belt system and make it safer for vehicle occupants who use it.

The expression "substantially maintain" a force at a predetermined level as used throughout this document is intended to mean that the force is maintained within 20% and preferably within 10% of the predetermined level.

According to an embodiment of the invention the predetermined first force is up to 50% of the predetermined second force, or up to 25 % of the predetermined second force, or up to 10% of the predetermined second force.

According to another embodiment of the invention the first predetermined force has a magnitude of up to 3 kN, up to 2 kN or up to 1 kN. According to a further embodiment of the invention the first force limiter is arranged to be mounted on the backrest of a vehicle occupant's seat. Due to the relatively small magnitude of the first predetermined force, the weight and size of the first force limiter will not result in the vehicle occupant's seat necessarily having to be strengthened or modified. Furthermore, the first locking means and/or a belt storage device may also be arranged mounted on the backrest of a vehicle occupant's seat.

According to an embodiment of the invention the seat belt system comprises detector means for detecting the fastened state of the 2-point seat belt and the 3-point seat belt. The seat belt system may also comprise alarm means for issuing an alarm signal if the 2-point seat belt and the 3-point seat belt are not fastened, whereby the alarm signal is switched off only when a vehicle occupant has fastened the 2-point seat belt and the 3-point seat belt. Furthermore, a seat belt system according to an embodiment of the invention may be arranged to comprise means to change the magnitude of the predetermined second force depending on whether the 2-point seat belt has been fastened or not.

According to another embodiment of the invention the 3-point seat belt is fixedly attached to the 2-point seat belt, whereby if a vehicle occupant pulls one of the two seat belts, he/she will also pull the other of the two seat belts.

According to a further embodiment of the invention the first force limiter is adjustable and allows the predetermined first force to be selected by a vehicle occupant.

The present invention further concerns a vehicle that comprises at least one seat belt system according to any of the embodiments of the invention. The vehicle may be a passenger car, a heavy goods vehicle, a bus, or any other vehicle for transporting at least one person.

### BRIEF DESCRIPTION OF THE DRAWINGS

The present invention will hereinafter be further explained by means of non-limiting examples with reference to the appended schematic figures where;
- Figure 1: shows a seat belt system according to an embodiment of the invention from the front,
- Figure 2: shows a seat belt system according to an embodiment of the invention from the side,
- Figure 3: shows a graph of the movement of a vehicle occupant's chest and the force exerted on a vehicle occupant by a seat belt system according to an embodiment of the invention, and
- Figure 4: shows a vehicle comprising a seat belt system or a 2-point seat belt according to an embodiment of the invention.

It should be noted that the drawings have not necessarily been drawn to scale and that the dimensions of certain features may have been exaggerated for the sake of clarity.

### DETAILED DESCRIPTION OF EMBODIMENTS

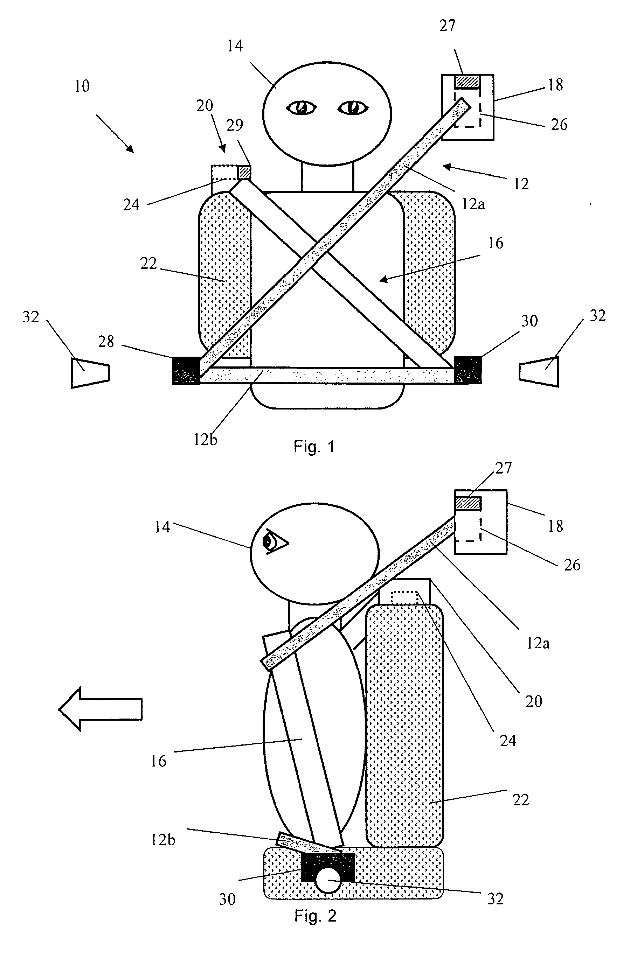

Figures 1 and 2 show a seat belt system 10 for a vehicle, such as a passenger car, according to an embodiment of the invention from the front and from the side respectively. The seat belt system 10 includes a 3-point seat belt 12 that comprises a first section 12a that is arranged to diagonally cross the chest of a vehicle occupant 14 and a second section 12b that is arranged to cross the pelvis of a vehicle occupant 14. The seat belt system 10 also comprises a more loosely fitting 2-point seat belt 16 that is arranged to diagonally cross the chest of a vehicle occupant 14 in a direction that crosses the first section 12a of the 3-point seat belt 12 so as to form an X-shape "criss-cross" seat belt.

The 3-point seat belt 12 is therefore arranged to absorb more force in the event of a collision than the 2-point seat belt 16.

The seat belt system 10 includes a first storage device 18 from which the 3-point seat belt 12 is arranged to be pulled out of, which is for example mounted on a pillar (not shown) of the vehicle, such as the B- or C-pillar (depending on whether the seat belt is for a front or rear seat of a vehicle) slightly above the vehicle occupant's shoulder, and fastened in fastening means 28, such as a conventional buckle, located at one side of the vehicle occupant's seat. The seat belt system 10 also includes a second storage device 20 from which the 2-point seat belt 16 is arranged to be pulled out of, which is mounted on the backrest 22 of a vehicle occupant's seat and fastened in fastening means 30 located at the other side of the vehicle occupant's seat. The belt storage devices 18, 20 may also be arranged to pull in excessive seat belt webbing and thereby eliminate slack in the seat belts 12, 16, i.e. the seat belts 12, 16 may be motorised. It should be noted that the 2-point seat belt 16 may alternatively be arranged to be fastened to the pelvic restraint 12b of the 3-point seat belt.

The seat belt system 10 comprises a first locking means 24 that is arranged to lock the 2-point seat belt 16 when the force on the seat belt exceeds a predetermined first force and an adjustable or non-adjustable first force limiter 29 that is arranged to substantially maintain the force exerted by the 2-point seat belt 16 on the vehicle occupant 14 at the predetermined first force on the seat belt.

The seat belt system 10 also comprises a second locking means 26 that is arranged to lock the 3-point seat belt 12 when the force on the 3-point seat belt 16 exceeds a predetermined second force and an adjustable or non-adjustable second force limiter 27 that is arranged to substantially maintain the force exerted by the 3-point seat belt 12 on the vehicle occupant 14 at the predetermined second force.

The belt storage device 18, 20 may for example comprise a spool around which the seat belt 12, 16 is wound and the locking means 24, 26 may be arranged to prevent the rotation of the spool immediately before or during a crash situation to prevent seat belt webbing payout. The locking means 24, 26 may for example comprise an inertia reel and a force limiter may be located inside the inertia reel and comprise a torsion bar which turns slowly when a force exceeding the predetermined level acts on a seat belt 12, 16, thereby producing a controlled reduction in the locking effect of the locking means. It should be noted that the locking means may alternatively be activated by means of a signal from a collision sensor or control system.

In the illustrated embodiment the first and second locking means 24, 25 and the first and second force limiters 27, 29, which may be any conventional or commercially available locking means or force limiters respectively, are incorporated inside the belt storage devices 18, 20 although this need not necessarily be the case. It should also be noted that the seat belt system according to the present invention need not necessarily comprise belt storage devices.

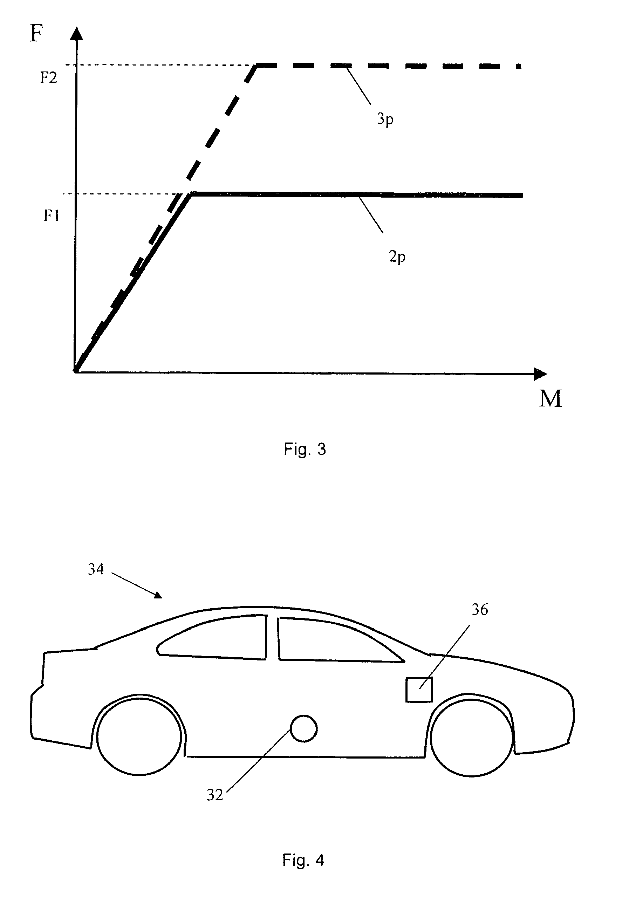

The seat belt system 10 illustrated in figures 1 and 2 may also comprise detector means 32 for detecting the fastened state of the 2-point seat belt 16 and the 3-point seat belt 12. The seat belt system 10 may also comprise alarm means (36 in figure 4) for issuing an alarm signal if the 2-point seat belt 16 and the 3-point seat belt 12 are not fastened, whereby the alarm signal may for example be arranged to be switched off only when a vehicle occupant 14 has fastened both the 2-point seat belt 16 and the 3-point seat belt 12.

It should be noted that the first section 12a of the 3-point seat belt 12 in the illustrated embodiment crosses over the 2-point seat belt 16. The 2-point seat belt 16 may however alternatively be arranged to cross over the first section 12a of the 3-point seat belt 12. Furthermore, the 3-point seat belt 12 may be fixedly attached to the 2-point seat belt 16, whereby if a vehicle occupant 14 pulls one of the two seat belts 12, 16, he/she will also pull the other of the two seat belts. The two seat belts 12, 16 may for example be joined to one another at the point where they overlap on a vehicle occupant's chest, whereby a vehicle occupant 14 may put on the joined seatbelts by putting his head through the V-shaped formed at the top of the criss-cross seat belt system and then fastening the lower end of the 3-point seat belt 12 in the fastening means 30 on one side of his/her seat and the lower end of the 2-point seat belt 16 in the fastening means 28 on the other side of his/her seat.

Figure 3 shows a graph of the movement of the chest of a vehicle occupant substantially in the direction of the block arrow shown in figure 2 and the force F applied to the chest of a vehicle occupant by a 3-point seat belt (line 3p) and a 2-point seat belt (line 2p) of a seat belt system according to an embodiment of the invention. The first locking means 24 lock the 2-point seat belt (line 2p) if/when the force on the 2-point seat belt exceeds a predetermined first force F1. The first force limiter 29 then substantially maintains the force exerted by the 2-point seat belt on the vehicle occupant at said predetermined first force F1. The second locking means 26 that is arranged to lock the 3-point seat belt 12 if/when the force on the seat belt exceeds a predetermined second force F2. The second force limiter 27 then maintains the force exerted by the 3-point seat belt on the vehicle occupant 14 substantially at the predetermined second force F2.

According to an embodiment of the invention the predetermined first force F1 is up to 50% of the predetermined second force F2, or up to 25 % of the predetermined second force F2, or up to 10% of the predetermined second force F2.

For example the first predetermined force F1 may have a magnitude of 1.5-2.0 kN and the second predetermined force F2 may have a magnitude of 3-6 kN.

Figure 4 shows a vehicle that comprises a seat belt system (not shown) according to of the embodiments of the invention. The vehicle 34 comprises detector means 32 for detecting the fastened state of the 2-point seat belt and the 3-point seat belt of the seat belt system contained therein and alarm means 36 for issuing an alarm signal if both the 2-point seat belt and the 3-point seat belt are not fastened.

Further modifications of the invention within the scope of the claims would be apparent to a skilled person.

For example the seat belt system of the present invention could also comprise two 2-point seat belts that are each arranged to diagonally cross the chest of a vehicle occupant so as to form an X-shape, instead of a 2-point seat belt and a 3-point seat belt.

Alternatively, said two 2-point seat belts could each be arranged to diagonally cross the chest of a vehicle occupant so as to form a V-shape, whereby a vehicle occupant could pull the two 2-point seat belts, one over each shoulder and fasten them to fastening means in the middle of a pelvic restraint for example. The two 2-point seat belts of this embodiment could be fixedly joined together at the point at which they are to be attached to the pelvic restraint for example.

## Claims

1. Seat belt system (10) for a vehicle including:
• a 3-point seat belt (12) that comprises a first section (12a) that is arranged to diagonally cross the chest of a vehicle occupant (14) and a second section (12b) that is arranged to cross the pelvis of a vehicle occupant (14), and
• a 2-point seat belt (16) that is arranged to diagonally cross the chest of a vehicle occupant (14) in a direction that crosses said first section (12a) of said 3-point seat belt (12) so as to form an X-shape,
said seat belt system (10) comprising:
• a first locking means (24) that is arranged to lock said 2-point seat belt (16) when the force on said 2-point seat belt (16) exceeds a predetermined first force (F1), and a first force limiter (29) that is arranged to substantially maintain the force exerted by the 2-point seat belt (16) on the vehicle occupant (14) at said predetermined first force (F1),
• a second locking means (26) that is arranged to lock said 3-point seat belt (12) when the force on said 3-point seat belt (12) exceeds a predetermined second force (F2), and a second force limiter (27) that is arranged to substantially maintain the force exerted by the 3-point seat belt (12) on the vehicle occupant (14) at said predetermined second force on the seat belt (F2), said seat belt system being **characterised in that**:
said predetermined first force (F1) is less than said predetermined second force (F2).

2. Seat belt system (10) according to claim 1, **characterized in that** it said predetermined first force (F1) is up to 50% of said predetermined second force on (F2), or up to 25 % of said predetermined second force (F2), or up to 10% of the said predetermined second force (F2).

3. Seat belt system (10) according to claim 1 or 2, **characterized in that** said predetermined first force (F1) has a magnitude of up to 3 kN, or up to 2 kN or up to 1 kN.

4. Seat belt system (10) according to any of the preceding claims, **characterized in that** said first force limiter (29) is arranged to be mounted on the backrest (22) of a vehicle occupant's seat.

5. Seat belt system (10) according to any of the preceding claims, **characterized in that** it comprises detector means (32) for detecting the fastened state of said 2-point seat belt (16) and/or said 3-point seat belt (12).

6. Seat belt system (10) according to claim 5, **characterized in that** it comprises alarm means (36) for issuing an alarm signal if said 2-point seat belt (16) and said 3-point seat belt (12) are not fastened, whereby said alarm signal is switched off only when a vehicle occupant (14) has fastened said 2-point seat belt (16) and said 3-point seat belt (12).

7. Seat belt system (10) according to claim 5 or 6, **characterized in that** it comprises means to change the magnitude of the predetermined second force (F2) depending on whether the 2-point seat belt (16) has been fastened or not.

8. Seat belt system (10) according to any of the preceding claims, **characterized in that** said 3-point seat belt (12) is fixedly attached to said 2-point seat belt (16), whereby if a vehicle occupant (14) pulls one of said two seat belts (12, 16), he/she will also pull the other of said two seat belts (16, 12).

9. Seat belt system (10) according to any of the preceding claims, **characterized in that** said first force limiter (29) is adjustable and allows said predetermined first force (F1) to be selected by a vehicle occupant (14).

10. Vehicle (34), **characterized in that** it comprises at least one seat belt system (10) according to any of claims 1-9.

## Patentansprüche

1. Ein Sitzgurtsystem (10) für ein Fahrzeug, einschließend:
• einen 3-Punkt-Sitzgurt (12), der einen ersten Abschnitt (12a), der so ausgelegt ist, dass er die Brust eines Fahrzeuginsassen (14) diagonal kreuzt, und einen zweiten Abschnitt (12b) umfasst, der so ausgelegt ist, dass er das Becken eines Fahrzeuginsassen (14) kreuzt, und
• einen 2-Punkt-Sitzgurt (16), der so ausgelegt ist, dass er die Brust eines Fahrzeuginsassen (14) diagonal in einer Richtung kreuzt, die den ersten Abschnitt (12a) des 3-Punkt-Sitzgurts (12) kreuzt, um somit eine X-Form zu schaffen, wobei das Sitzgurtsystem (10) umfasst:
• ein erstes arretierendes Mittel (24), das dazu ausgelegt ist, den 2-Punkt-Sitzgurt (16) zu arretieren, wenn die auf den 2-Punkt-Sitzgurt (16) einwirkende Kraft eine vorbestimmte erste Kraft (F1) überschreitet, und einen ersten Kraftbegrenzer (29), der dazu ausgelegt ist, die Kraft, welche durch den 2-Punkt-Sitzgurt (16) auf den Fahrzeuginsassen (14) ausgeübt wird, im wesentlichen bei der vorbestimmten ersten Kraft (F1) aufrecht zu erhalten,
• ein zweites arretierendes Mittel (26), das dazu ausgelegt ist, den 3-Punkt - Sitzgurt (12) zu arretieren, wenn die auf den 3-Punkt-Sitzgurt (12) einwirkende Kraft eine vorbestimmte zweite Kraft (F2) überschreitet, und einen zweiten Kraftbegrenzer (27), der dazu ausgelegt ist, die Kraft, welche durch den 3-Punkt-Sitzgurt (12) auf den Fahrzeuginsassen (14) ausgeübt wird, im wesentlichen bei der vorbestimmten zweiten Kraft (F2) aufrecht zu erhalten,
wobei das Sitzgurtsystem **dadurch gekennzeichnet ist, dass** die vorbestimmte erste Kraft (F1) geringer als die vorbestimmte zweite Kraft (F2) ist.

2. Sitzgurtsystem (10) nach Anspruch 1, **dadurch gekennzeichnet, dass** die vorbestimmte erste Kraft (F1) bis zu 50% der vorbestimmten zweiten Kraft (F2) oder bis zu 25% der vorbestimmten zweiten Kraft (F2) oder bis zu 10% der vorbestimmten zweiten Kraft (F2) beträgt.

3. Sitzgurtsystem (10) nach Anspruch 1 oder 2, **dadurch gekennzeichnet, dass** die vorbestimmte erste Kraft (F1) eine Stärke von bis zu 3 kN oder bis zu 2 kN oder bis zu 1 kN hat.

4. Sitzgurtsystem (10) nach einem der vorhergehenden Ansprüche, **dadurch gekennzeichnet, dass** der erste Kraftbegrenzer (29) dazu ausgelegt ist, auf der Rückenlehne (22) eines Fahrzeuginsassensitzes angebracht zu werden.

5. Sitzgurtsystem (10) nach einem der vorhergehenden Ansprüche, **dadurch gekennzeichnet, dass** es Detektormittel (32) zum Erkennen des angelegten Zustands des 2-Punkt-Sitzgurts (16) und/oderdes 3-Punkt-Sitzgurts (12) umfasst.

6. Sitzgurtsystem (10) nach Anspruch 5, **dadurch gekennzeichnet, dass** es Warnmittel (36) umfasst, um ein Warnsignal auszugeben, wenn der 2-Punkt - Sitzgurt (16) und der 3-Punkt-Sitzgurt (12) nicht angelegt sind, wobei das Warnsignal nur ausgeschaltet wird, wenn ein Fahrzeuginsasse (14) den 2-Punkt-Sitzgurt (16) und den 3-Punkt-Sitzgurt (12) angelegt hat.

7. Sitzgurtsystem (10) nach Anspruch 5 oder 6, **dadurch gekennzeichnet, dass** es Mittel zum Ändern der Stärke der vorbestimmten zweiten Krafteinwirkung (F2) umfasst, in Abhängigkeit davon, ob der 2-Punkt-Sitzgurt (16) angelegt wurde oder nicht.

8. Sitzgurtsystem (10) nach einem der vorhergehenden Ansprüche, **dadurch gekennzeichnet, dass** der 3-Punkt - Sitzgurt (12) fest mit dem 2-Punkt - Sitzgurt (16) verbunden ist, wodurch, wenn ein Fahrzeuginsasse (14) an einem der beiden Sitzgurte (12, 16) zieht, er/sie ebenso an dem anderen der beiden Sitzgurte (16, 12) ziehen wird.

9. Sitzgurtsystem (10) nach einem der vorhergehenden Ansprüche, **dadurch gekennzeichnet, dass** der erste Kraftbegrenzer (29) verstellbar ist und es einem Fahrzeuginsassen (14) gestattet, die vorbestimmte erste Kraft (F1) zu wählen.

10. Fahrzeug (34), **dadurch gekennzeichnet, dass** es mindestens ein Sitzgurtsystem (10) nach einem der Ansprüche 1 bis 9 umfasst.

## Revendications

1. Système (10) de ceinture de sécurité pour un véhicule, comprenant :
- une ceinture de sécurité 3 points (12) qui comprend une première section (12a) qui est prévue pour traverser diagonalement la poitrine d'un occupant (14) du véhicule et une deuxième section (12b) qui est prévue pour traverser le pelvis d'un occupant (14) du véhicule, et
- une ceinture de sécurité 2 points (16) qui est prévue pour traverser diagonalement la poitrine d'un occupant (14) du véhicule dans une direction croisant ladite première section (12a) de ladite ceinture de sécurité 3 points (12) afin de former un X,
ledit système (10) de ceinture de sécurité comprenant :
- un premier moyen de blocage (24), qui est prévu pour bloquer ladite ceinture de sécurité 2 points (16) lorsque la force sur ladite ceinture de sécurité 2 points (16) excède une première force prédéterminée (F1), et un premier limiteur de force (29) qui est prévu pour maintenir sensiblement la force exercée par la ceinture de sécurité 2 points (16) sur l'occupant (14) du véhicule à ladite première force prédéterminée (F1),
- un deuxième moyen de blocage (26), qui est prévu pour bloquer ladite ceinture de sécurité 3 points (12) lorsque la force sur ladite ceinture de sécurité 3 points (12) excède une deuxième force prédéterminée (F2), et un deuxième limiteur de force (27) qui est prévu pour maintenir sensiblement la force exercée par la ceinture de sécurité 3 points (12) sur l'occupant (14) du véhicule à ladite deuxième force prédéterminée (F2) sur ladite ceinture de sécurité ,
ledit système de ceinture de sécurité étant ***caractérisé en ce que***
ladite première force prédéterminée (F1) est inférieure à ladite deuxième force prédéterminée (F2).

2. Système (10) de ceinture de sécurité selon la revendication 1, ***caractérisé en ce que*** ladite première force prédéterminée (F1) représente jusqu'à 50 % de ladite deuxième force prédéterminée (F2), ou jusqu'à 25 % de ladite deuxième force prédéterminée (F2), ou jusqu'à 10 % de ladite deuxième force prédéterminée (F2).

3. Système (10) de ceinture de sécurité selon la revendication 1 ou 2, ***caractérisé en ce que*** ladite première force prédéterminée (F1) est d'une grandeur allant jusqu'à 3 kN, ou jusqu'à 2 kN ou jusqu'à 1 kN.

4. Système (10) de ceinture de sécurité selon l'une quelconque des revendications précédentes, ***caractérisé en ce que*** ledit premier limiteur de force (29) est prévu pour être monté sur le dossier (22) du siège d'un occupant du véhicule.

5. Système (10) de ceinture de sécurité selon l'une quelconque des revendications précédentes, ***caractérisé en ce qu*'**il comprend des moyens de détecteur (32) pour détecter l'état de bouclage de ladite ceinture de sécurité 2 points (16) et/ou de ladite ceinture de sécurité 3 points (12).

6. Système (10) de ceinture de sécurité selon la revendication 5, ***caractérisé en ce qu*'**il comprend des moyens d'alarme (36) pour émettre un signal d'alarme si ladite ceinture de sécurité 2 points (16) et ladite ceinture de sécurité 3 points (12) se sont pas attachées, ledit signal d'alarme ne s'éteignant que lorsqu'un occupant (14) du véhicule a attaché ladite ceinture de sécurité 2 points (16) et ladite ceinture de sécurité 3 points (12).

7. Système (10) de ceinture de sécurité selon la revendication 5 ou 6, ***caractérisé en ce qu*'**il comprend des moyens pour modifier la grandeur de la deuxième force prédéterminée (F2) en fonction du fait que la ceinture de sécurité 2 points (16) a été attachée ou non.

8. Système (10) de ceinture de sécurité selon l'une quelconque des revendications précédentes, ***caractérisé en ce que*** ladite ceinture de sécurité 3 points (12) est attachée de manière fixe à ladite ceinture de sécurité 2 points (16), ce qui fait que si un occupant (14) du véhicule tire l'une des deux ceintures de sécurité (12, 16), il/elle tirera également l'autre des deux ceintures de sécurité (16, 12).

9. Système (10) de ceinture de sécurité selon l'une quelconque des revendications précédentes, ***caractérisé en ce que*** ledit premier limiteur de force (29) est réglable et permet à ladite première force prédéterminée (F1) d'être choisie par un occupant (14) du véhicule.

10. Véhicule (34) ***caractérisé en ce qu*'**il comprend au moins un système (10) de ceinture de sécurité selon l'une quelconque des revendications 1 à 9.
